Europäisches Patentamt

European Patent Office

Office européen des brevets

(19)

(11) Veröffentlichungsnummer: **0 111 727**
**A1**

(12) # EUROPÄISCHE PATENTANMELDUNG

(21) Anmeldenummer: **83111180.2**

(22) Anmeldetag: **09.11.83**

(51) Int. Cl.³: **G 02 B 21/34**

(30) Priorität: **11.11.82 DE 3241762**

(43) Veröffentlichungstag der Anmeldung:
**27.06.84 Patentblatt 84/26**

(84) Benannte Vertragsstaaten:
**AT BE CH FR GB IT LI LU NL SE**

(71) Anmelder: **Kielmann, Jürgen, Dr.**
**Hinter der Braake 22**
**D-3008 Garbsen 2(DE)**

(72) Erfinder: **Kielmann, Jürgen, Dr.**
**Hinter der Braake 22**
**D-3008 Garbsen 2(DE)**

(54) **Objektträgerglas zur Aufnahme einer Dünnschliffprobe.**

(57) Die Erfindung betrifft ein Objektträgerglas (1) zur Aufnahme einer Dünnschliffprobe (2) zur mikroskopischen Untersuchung. Erfindungsgemäß ist das Objektträgerglas (1) als kreisförmige Scheibe ausgebildet. Dabei wird durch eine Dickenverringerung des Glases außerhalb des zentralen Bereiches die Retention zwischen Probe (2), Objektträgerglas (1) und Kittsubstanz (3) optimiert, wobei die optischen Bedingungen im Objektbereich gewahrt bleiben. So ergibt sich ein vereinfachtes und verbessertes Herstellungsverfahren für Dünnschliffe.

Fig. 2

EP 0 111 727 A1

Objektträgerglas zur Aufnahme einer Dünnschliffprobe

Die Erfindung betrifft ein Objektträgerglas zur Aufnahme einer Dünnschliffprobe nach dem Oberbegriff des Anspruchs 1.

Um Feinstrukturen von Hartsubstanzen, wie z.B. Gesteinsproben oder medizinische Proben präziser auswerten, d.h. z.B. mikroskopisch betrachten zu können, werden die Proben im allgemeinen in einen Einbettstoff gebracht und dann so dünn geschliffen, daß sie im Durchlicht mikroskopiert werden können. In der vorbereitenden Phase erfolgt die Aufbereitung der Proben in gleichen Arbeitsgängen wie beim Anschliff, nämlich durch Einbetten, Imprägnieren, Schleifen und Polieren.

Zur Herstellung von Dünnschliffen sind im allgemeinen folgende weitere Arbeitsgänge erforderlich. Nach der Proben-Einbettung und der Politur der Anschliffseite wird die polierte Fläche auf ein Objektträgerglas aufgekittet. Die Probe wird dann auf eine maximale Dicke von ca. 1 mm gesägt, dann dünngeschliffen und poliert. Das Trennsägen des aufgekitteten Anschliffs erfolgt in bekannter Weise mit Diamant-Sägen unter ausreichender Kühlflüssigkeitszufuhr.

Die in der Mikroskopie verwendeten Durchlicht-Objektive sind optisch so berechnet, daß bei der Betrachtung das Präparat, das Deckglas und das Objektträgerglas eine optische Einheit bilden, wobei allein das Objekt eine Variable darstellt. Daher ist es notwendig, daß die vorgegebenen Brechungindizes der verwendeten Gläser streng beachtet werden. Das für die Betrachtung notwendige Objektträgerglas wird auch schon als Stabilisator der bruchgefährdeten Probe genutzt.

0111727

In bekannter Weise wird die Probe mit Hilfe einer Aufkittsubstanz wie z.B. eine unter dem Namen ARALDIT der Firma Ciba-Geigy bekannte Aufkittsubstanz auf das Objektträgerglas aufgekittet. Damit wird der Bruchgefahr oder Artefaktausbildung der dünnen Probe vorgebeugt. Der Brechungsindex der bekannten Aufkittsubstanzen entspricht annähernd den optischen Werten der üblichen Einschlußmittel.

Bekannte Objektträgergläser sind in rechteckigen Standardmaßen (76x26 mm) oder quadratisch geschnitten handelsüblich. Bei der Verwendung bekannter Objektträgergläser gestaltet sich die Reinigung der beim Schleifen und Polieren erforderlichen Halterungen schwierig. Es tritt daher häufig eine Schleifmittelverschleppung auf. Beim Anschleifen der Proben ergibt sich eine ungleichmäßige Druckverteilung und damit eine ungleiche Dickenverteilung der Probe.

Anstelle von rechteckig oder quadratisch geschnittenen Objektträgergläsern sind in der DD-PS 94 901 auch bereits kreisförmig ausgebildete Objektträger genannt. Die kreisförmige Form dient dabei zur vereinfachten Winkeldrehung des Objektträgers bei einem automatisierten Untersuchungs- und Auswerteverfahren, insbesondere für hämatologische Präparate. Dieser Druckschrift ist weder ein Hinweis auf eine mögliche Verwendung von kreisförmigen Objektträgergläsern zur Dünnschliffherstellung noch eine Angabe zur Fixierung von Objekten auf einem derartigen Objektträgerglas zu entnehmen.

Der Erfindung liegt die Aufgabe zugrunde, ein zur Herstellung von Dünnschliffen geeignetes Objektträgerglas anzugeben, das eine verbesserte Druckverteilung beim Anschliff, eine vereinfachte Handhabung, eine homogenere Verbindung zwischen Präparat und Objektträgerglas und eine verbesserte Reinigung ermöglicht.

Diese Aufgabe wird durch die in den Ansprüchen angegebene Erfindung gelöst. Vorteilhafte Weiterbildungen der Erfindung sind in Unteransprüchen angegeben.

Durch die erfindungsgemäße Ausführung eines Objektträgerglases wird eine Haftverbesserung zwischen Probe und Objektträgerglas erreicht, ohne daß die optischen Eigenschaften beeinflußt werden. Es lassen sich sogar im Bereich der Probe sehr dünne Kittfilme in gleichmäßiger reproduzierbarer Dicke erreichen, welches insbesondere für quantitative Messungen von besonderem Vorteil ist.

Ein erfindungsgemäßes Objektträgerglas in kreisförmiger Form erleichtert den Arbeitsaufwand bei der Dünnschliffpräparation erheblich. Optimal lassen sich auf den rotierenden Scheiben handelsüblicher Poliergeräte nur kreisrunde Probenformen aufbereiten. Im Gegensatz zur rechteckigen oder quadratischen Glasform verteilt sich auf runden Objektträgergläsern der Druck während des Abtragens der Schichten auf dem Polierteller gleichmäßig. Damit werden hochgradig ebene Oberflächen der Dünnschliffe erreicht.

Durch Verwendung von kreisförmigen Halteringen sind mechanische Einspannarbeiten überflüssig, womit auch die Gefahr der Beschädigungen verringert ist. Kreisförmige Halteringe sind auch leichter zu reinigen als rechteckige Spannvorrichtungen. Damit wird der Gefahr von Schmutznischenretentionen vorgebeugt.

Da Objektträgerglas und Probe eine glattflächige zylindrische Einheit bilden, läßt sich beim Dünnschleifen und Polieren die Verschleppung von Schleifpartikeln von einem Schleifgang zum nächsten weitgehend verhindern.

Nach dem Aufkitten der Probe am Rande übergetretene Kittsubstanz läßt sich leicht mit einem Karborundumstein oder Schleifpapier entfernen. Da rechteckige Objektträgergläser nur partiell von der Probe bedeckt werden, bleibt bei ihnen auf dem Präparatrand eine Stufe bestehen, deren Scherkräfte den gleichmäßigen Materialabtrag durch die Polierscheibe und die Materialstandzeit ungünstig beeinflussen.

Eine kreisrunde scheibenförmige Dünnschliffprobe paßt sich den Druckverhältnissen bei den Rotationsbewegungen der Polierscheibe optimaler an als eine rechteckige Probe. Exzentrische Druckverlagerungen und Torsionen in der Probe lassen sich somit stark reduzieren.

Des weiteren läßt sich die Dokumentation und Archivierung der Proben erleichtern, da Durchmesser und Kreisform denen der Probe entsprechen. Es ist für Anschliffe und Dünnschliffe nur eine Art von Aufbewahrungskästen erforderlich.

Die Erfindung wird nachstehend an Hand eines Ausführungsbeispiels näher erläutert. Es zeigen:

Fig. 1    ein erfindungsgemäßes Objektträgerglas,

Fig. 2    einen Querschnitt einer Dünnschliffprobe, aufgekittet auf ein erfindungsgemäßes Objektträgerglas,

Fig. 3    einen Querschnitt einer Dünnschliffprobe, aufgekittet auf einer anderen Ausführungsform eines erfindungsgemäßen Objektträgerglases.

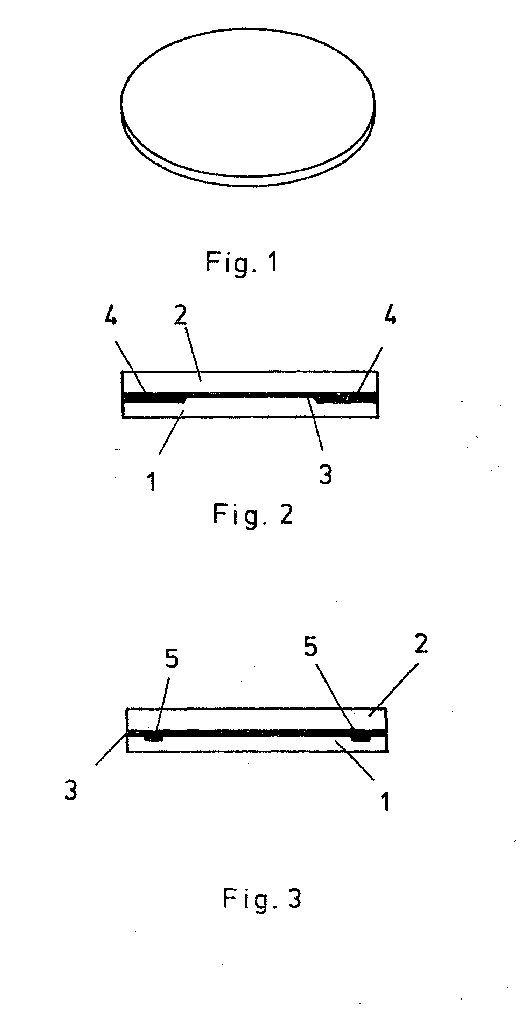

In Fig. 1 ist ein erfindungsgemäßes Objektträgerglas dargestellt. Die kreisförmige Ausbildung bietet zur Herstellung von Dünnschliffen besondere Vorteile. Bekannte Objektträgergläser, die rechteckig oder quadratisch ausgebildet sind, werden üblicherweise aus reinweißem Brillenrohglas, z.B. B 270 der Firma DESAG, hergestellt.

Zum Dünnschleifen und Polieren wird die auf ein Objektträgerglas aufgekittete Probe in einen ringförmigen Haltering eingesetzt. In den Haltering ist vorzugsweise ein zylindrischer Stempel eingesetzt, an dem die Probe anliegt, und der an einem Ende einen Anschlag aufweist. Die Länge des Stempels ist dabei so gewählt, daß die Probe im ungeschliffenen Zustand durch den Anschlag nur so weit aus dem Haltering herausragt, daß nach dem Dünnschleifen die Oberfläche der Probe gerade mit der Unterkante des Ringes abschließt. Indem der Haltering das weitere Abtragen verhindert, wird in einfacher Weise vermieden, daß die Probe zu weit abgeschliffen werden könnte. Die Probe liegt zwar an dem Stempel in dem Haltering an, sie ist im übrigen jedoch frei beweglich. Beim Anschleifen von Proben auf rechteckigen Objektträgergläsern ist hingegen ein Einspannen in einer Halteanordnung erforderlich. Durch mehrfaches Einspannen für die verschiedenen Schleifgänge kann damit leicht eine Beschädigung erfolgen. Kreisrunde Halteformen sind weiterhin einfacher zu reinigen als rechteckige Halteklammern, die zu Schmutznischenretentionen führren können.

Figur 2 zeigt eine Probe 2, die auf ein Objektträgerglas 1 mit Hilfe einer Kittsubstanz 3 aufgekittet ist. Durch die erfindungsgemäße Dickenverringerung des Objektträgerglases an den Stellen 4 außerhalb des zentralen Bereiches wird infolge der dadurch partiell dickeren Schicht der Kittsubstanz 3 ein Dämpfungseffekt erreicht, der sich günstig auf Torsion und die unterschiedliche Elastizität von Probe und Glasscheibe auswirkt. Gerade im Randbereich treten beim Abtragen erhöhte Schubkräfte auf, die gewöhnlich zu einer Kantenabrundung führen. Bei sehr dünnen Proben und der relativ starren Glasfläche kann sich die Probe bei der bekannten Dünnschlifftechnik durch die auftretenden Druckkräfte von der Glasunterlage lösen. Die partiell dickere Schicht der Kittsubstanz wirkt hier ausgleichend.

Für die mikroskopische Untersuchung ist nur der Anteil des Objektträgerglases direkt unter der Probe und in deren unmittelbarer Umgebung (Streustrahlung) von Bedeutung. Die gesamte weitere Umrandung kann also für die Haftverbesserung und Kittsubstanzverdickung genutzt werden.

Im Probenbereich sollte der Kittsubstanzfilm so dünn wie möglich sein. Durch die Dickenverringerung des Objektträgerglases im Randbereich kann daher die Kittsubstanz in der Aushärtephase besser ausweichen, so daß sich für quantitative Messungen leichter reproduzierbare Werte der Schichtdicke ergeben.

Figur 3 zeigt eine Probe 2, die auf ein Objektträgerglas 1 anderer Ausgestaltung aufgekittet ist. Das kreisrunde Objektträgerglas ist dabei in seinem Randbereich einseitig mit einer Nut 5 versehen. Die Nut 5 kann durch Fräsen oder Drehen erzeugt werden.

Die Aufbereitung von erfindungsgemäßen Objektträgergläsern kann z.B. auch in folgender Weise vorgenommen werden:

a) Durch mechanisches Abtragen mit Hilfe von Diamantsteinen;
b) Durch Ätzung mit Flußsäure, wobei durch teilweise Abdeckung beliebige Formen erzeugt werden können;
c) Durch Sandstrahlen bei ebenfalls beliebigen Retentionsformen.

Diese Methoden verbessern in besonderer Weise die Haftvermittlung zwischen Glasoberfläche und Probe. Die optischen Bedingungen im zentralen Bereich bleiben dabei voll gewahrt.

0111727

Patentansprüche

1. Objektträgerglas zur Aufnahme einer Dünnschliffprobe zur mikroskopischen Untersuchung, dadurch gekennzeichnet, daß es als kreisförmige Scheibe ausgebildet ist und die Dicke des Glases außerhalb eines zentralen Bereichs (4,5) verringert ist.

2. Objektträgerglas nach Anspruch 1, dadurch gekennzeichnet, daß in seinem Randbereich eine ringförmige Dickenverringerung (5) vorgesehen ist.

3. Objektträgerglas nach Anspruch 2, dadurch gekenn-zeichnet, daß die Dickenverringerung als eine ringförmige Nut (5) im Randbereich ausgebildet ist.

4. Objektträgerglas nach Anspruch 1, dadurch gekennzeichnet, daß die Dickenverringerung durch mechanisches Abtragen hervorgerufen ist.

5. Objektträgerglas nach Anspruch 1, dadurch gekennzeichnet, daß die Dickenverringerung durch Flußsäureätzung hervorgerufen ist.

6. Objektträgerglas nach Anspruch 1, dadurch gekennzeichnet, daß die Dickenverringerung durch Sandstrahlen hervorgerufen ist.

7. Objektträgerglas nach Anspruch 1, dadurch gekennzeichnet, daß die Dickenverringerung nur auf einer Seite des Glases vorgesehen ist.

0111727

Fig. 1

Fig. 2

Fig. 3

82/005-KI003

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | CH-A- 400 607 (MERZ & DADE) * Seite 1, Spalte 2, Zeilen 50-60; Figuren * | 1 | G 02 B 21/34 |
| | --- | | |
| A,D | DD-A- 94 901 (M. WEISSEL) * Patentansprüche * | 1 | |
| | ----- | | |

**RECHERCHIERTE SACHGEBIETE (Int. Cl. 3)**

G 02 B
G 01 N

Der vorliegende Recherchenbericht wurde für alle Patentansprüche erstellt.

| Recherchenort | Abschlußdatum der Recherche | Prüfer |
|---|---|---|
| DEN HAAG | 20-02-1984 | PFAHLER R. |